# EUROPÄISCHE PATENTSCHRIFT

(11) **EP 3 351 403 B1**
(45) Veröffentlichungstag und Bekanntmachung des Hinweises auf die Patenterteilung: **05.07.2023**
(21) Anmeldenummer: 17206766.2
(22) Anmeldetag: 12.12.2017
(51) Int. Cl.: B60B 27/00, B60B 27/02

(54) **RADLAGER FÜR EIN KRAFTFAHRZEUG**
WHEEL BEARING FOR A MOTOR VEHICLE
ROULEMENT DE ROUE POUR UN VÉHICULE AUTOMOBILE

(30) Priorität: 11.01.2017 DE 102017200338
(43) Veröffentlichungstag der Anmeldung: 25.07.2018
(73) Patentinhaber: AUDI AG, 85045 Ingolstadt (DE)
(72) Erfinder: Albl, Johannes, 85055 Ingolstadt (DE); Frisch, Michael, 94513 Schönberg (DE)

(56) Entgegenhaltungen:
- EP-A1- 1 006 290
- WO-A1-2006/095603
- WO-A1-2013/100285
- JP-A- 2009 286 238
- JP-A- 2016 003 709

## Beschreibung

Die Erfindung betrifft eine Radlageranordnung für ein Kraftfahrzeug nach der im Oberbegriff von Anspruch 1 näher definierten Art.

Eine gattungsgemäße Radlageranordnung ist aus der DE 31 40 373 A1 bekannt. Dabei ist in einer Ausführungsform die Bremsscheibe auf der Mantelfläche eines axial vorragenden Absatzes eines Befestigungsflanschs zentriert.

Ein weiteres derartiges Radlager ist aus der JP 2016 003709 A bekannt. Dabei steht ein Teil des Flanschabschnitts über den Außenring des Radlagers in Richtung der Fahrzeuginnenseite über, um als Element der radseitigen Abdichtung zu dienen.

Ein weiteres derartiges Radlager beschreibt die WO 2007/0753862 A2. Hierbei ist die Radnabe im Bereich der Radbolzen in Richtung der Fahrzeuginnenseite aufgedickt, um eine ausreichende Klemmlänge für die Radbolzen zu erzeugen. Der Flanschabschnitt des Innenrings des Radlagers weist eine Anlagefläche auf, an der die Bremsscheibe und die Felge fixiert werden. Ein ähnliches Radlager zeigt auch die JP 2009 286238 A.

Die WO 2013/100285 A1 bezieht sich auf eine gekoppelte Radlagerstruktur mit einer Radnabe, die drehbar an dem Aufhängungssystem eines Fahrzeugs befestigt ist.

Das Problem der bekannten Radlager ist deren verhältnismäßig großer Platzbedarf und das hohe Gewicht derselben.

Es ist daher Aufgabe der vorliegenden Erfindung, eine Radlageranordnung für ein Kraftfahrzeug mit einer kompakten und gewichtsoptimierten Bauweise zu schaffen.

Erfindungsgemäß wird diese Aufgabe durch die in Anspruch 1 genannten Merkmale gelöst.

Durch die erfindungsgemäß gestufte bzw. gekröpfte Ausführung des Flanschabschnitts ergibt sich eine sehr kompakte Bauweise des Radlagers der erfindungsgemäßen Radlageranordnung, da die Anlagefläche für die Bremsscheibe mit einem entsprechend groß ausgeführten Innendurchmesser in Richtung der Fahrzeuginnenseite verschoben wird, so dass sich der in axialer Richtung notwendige Bauraum für das Radlager und für die an demselben befestigte Bremsscheibe verkleinert, da die Dicke des Bremsscheibentopfes ganz oder zumindest teilweise aus der axialen Maßkette für den axialen Bauraum verschwindet. Gleichzeitig weist der rückwärtige Flanschabschnitt auf der der Anlagefläche für die Bremsscheibe gegenüberliegenden Seite einen zumindest teilweise umlaufenden Vorsprung auf, der die Festigkeit des Flanschabschnitts erhöht bzw. gegenüber einer konventionellen, nicht gekröpften Lösung beibehält. Da sich dieser umlaufende Vorsprung in Richtung der Fahrzeuginnenseite befindet, trägt er vorteilhafterweise nicht zur Vergrößerung des axialen Bauraums des erfindungsgemäßen Radlagers bei. Die gestufte Ausführung des Flanschabschnitts ist dabei nicht nur lokal im Bereich der Radschrauben bzw. Radbolzen, sondern um den gesamten Umfang des Radlagers vorgesehen.

Um eine im Bereich der Fahrzeugaußenseite annähernd ebene Fläche zu erzeugen, ist erfindungsgemäß des Weiteren vorgesehen, dass der Versatz der Anlagefläche zum Anbringen der Bremsscheibe gegenüber dem am weitesten von der axialen Mitte des Außenrings beabstandeten Abschnitt des Flanschabschnitts in axialer Richtung der Dicke der Bremsscheibe entspricht. Die Bauraumersparnis durch die erfindungsgemä-ße Stufung des Flanschabschnitts entspräche in dieser Variante damit exakt der Dicke bzw. der Stärke der Bremsscheibe.

In einer sehr vorteilhaften Weiterbildung der Erfindung kann vorgesehen sein, dass die Anlagefläche zum Anbringen der Bremsscheibe gegenüber dem am weitesten von der axialen Mitte des Außenrings beabstandeten Abschnitt des Flanschabschnitts in radialer Richtung außen angeordnet ist. Dadurch ergibt sich ein im Vergleich zu bekannten Lösungen vergrößerter Innendurchmesser der Bremsscheibe, so dass im mittleren Bereich des Radlagers, also in dem Bereich um dessen Längsachse, zusätzlicher Platz entsteht. Durch die Vergrößerung des Innendurchmessers der Bremsscheibe kann außerdem das Gewicht derselben verringert werden. Des Weiteren lässt sich über den größeren Durchmesser der Bremsscheibe eine höhere Reibung übertragen.

Die erfindungsgemäße, sehr kompakte Bauweise des Radlagers kann noch dadurch verbessert werden, dass der sich auf der der Anlagefläche zum Anbringen der Bremsscheibe gegenüberliegenden Seite befindende, zumindest teilweise umlaufende Vorsprung in radialer Richtung außerhalb von Teilen des Außenrings, einer Radlagerdichtung oder eines Wälzkörpersatzes angeordnet ist.

Dasselbe gilt, wenn der Innendurchmesser der Bremsscheibe größer ist als der Durchmesser einer Lauffläche des Außenrings, gemessen im Kontaktwinkel, beispielsweise bei einem verkürzten Außenring.

In einer sehr vorteilhaften Weiterbildung der Erfindung wird der Innendurchmesser des Bremsscheibentopfes erhöht, um das Radlager in axialer Richtung unter der Bremsscheibe nach Fahrzeugaußen auszudehnen. Dadurch kann unter Beibehaltung des axialen Bauraums einer konventionellen Lösung ein größerer Reihenabstand oder mehr Dichtraum realisiert werden, was sich vorteilhaft auf die Lebensdauer und Dichtigkeit auswirkt. Außerdem werden doppelte Flansche vermieden und damit eine Reduzierung des Gewichts erreicht. Die Ausdehnung kann auch in den Bereich der Felge hineinragen.

Des Weiteren kann vorgesehen sein, dass die Bremsscheibe einen derartigen Innendurchmesser aufweist, dass an dem Radlager angebrachte Radbolzen zumindest teilweise radial weiter außen liegen als der Innendurchmesser der Bremsscheibe, d.h. die Durchgangsbohrungen für die Radbolzen in der Bremsscheibe müssen nach radial innen nicht geschlossen sein. Ein Vorteil dieser Ausführung ist, dass auf ein aufwändiges Herstellen des Bohrbildes der Bremsscheibe (Innenzentrierung und Bohrungen für Radbolzen) verzichtet werden kann, da die Positionier- und Zentrierkulisse bereits in der Gussform vorgehalten werden kann.

Nachfolgend sind Ausführungsbeispiele der Erfindung anhand der Zeichnung prinzipmäßig dargestellt.

Es zeigt:
- Fig. 1: eine Schnittansicht des erfindungsgemäßen Radlagers im Zusammenbau mit Radträger und Bremsscheibe;
- Fig. 2: eine perspektivische Ansicht einer ersten Ausführungsform des erfindungsgemäßen Radlagers;
- Fig. 3: eine perspektivische Ansicht einer zu dem Radlager aus Fig. 2 passenden Bremsscheibe;
- Fig. 4: eine Draufsicht auf eine mit dem Radlager aus Fig. 2 montierte Bremsscheibe aus Fig. 3;
- Fig. 5: eine perspektivische Ansicht einer zweiten Ausführungsform des erfindungsgemäßen Radlagers;
- Fig. 6: eine perspektivische Ansicht einer zu dem Radlager aus Fig. 5 passenden Bremsscheibe;
- Fig. 7: eine Schnittansicht des erfindungsgemäßen Radlagers mit darin eingezeichneten Maßen;
- Fig. 8: eine Schnittansicht einer weiteren Ausführungsform des erfindungsgemäßen Radlagers;
- Fig. 9: eine perspektivische Ansicht des Radlagers aus Fig. 8;
- Fig. 10: eine weitere perspektivische Ansicht des Radlagers aus Fig. 8; und
- Fig. 11: eine Seitenansicht des Radlagers aus Fig. 8.

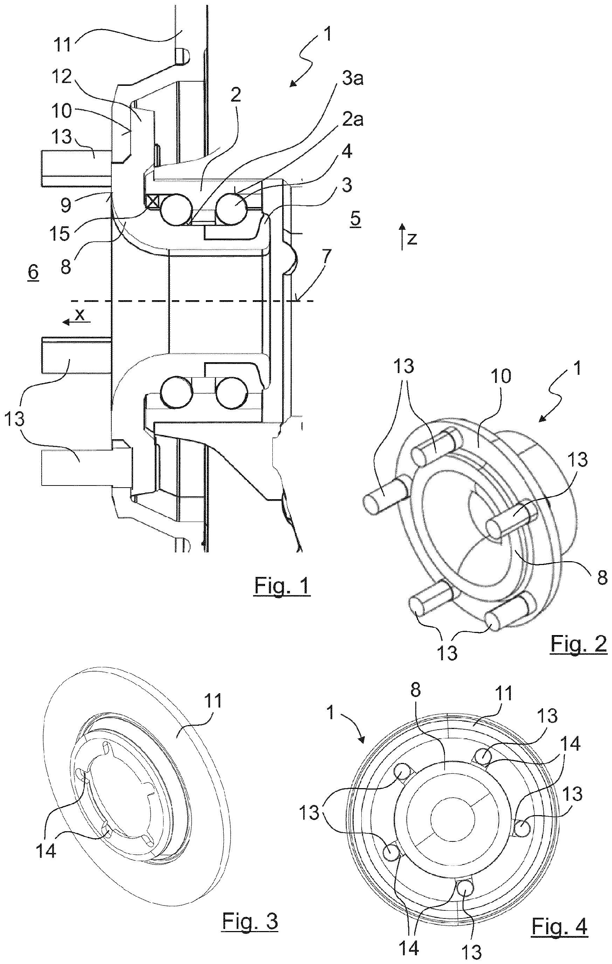

Fig. 1 zeigt ein Radlager 1 für ein nicht dargestelltes Kraftfahrzeug. Das Radlager 1 weist einen Außenring 2 und einen zumindest teilweise innerhalb des Außenrings 2 angeordneten Innenring 3 auf. In an sich bekannter Weise befinden sich zwischen dem Außenring 2 und dem Innenring 3 mehrere einen Wälzkörpersatz 4 bildende Wälzkörper, die an einer Lauffläche 2a des Au-ßenrings 2 und an einer Lauffläche 3a des Innenrings 3 anliegen.

Das Radlager 1 weist eine in der mit "x" bezeichneten axialen Richtung des Außenrings 2 und des Innenrings 3 von einer Fahrzeuginnenseite 5 zu einer Fahrzeugaußenseite 6 verlaufende Längsachse 7 auf. An der Fahrzeugaußenseite 6 des Radlagers 1 kann in an sich bekannter Weise ein nicht dargestelltes Rad befestigt werden. Hierzu weist der Innenring 3 an seinem der Fahrzeugaußenseite 6 zugerichteten Ende einen Flanschabschnitt 8 auf, der einen ersten Abschnitt 9, der als am weitesten von einer axialen Mitte des Außenrings 2 beabstandeter Abschnitt 9 bezeichnet wird, und einen zweiten Abschnitt aufweist, der eine Anlagefläche 10 zum Anbringen einer Bremsscheibe 11 bildet, an der wiederum das nicht dargestellte Rad über Radbolzen 13 fixiert wird.

Wie in Fig. 1 erkennbar ist, ist der Flanschabschnitt 8 im Bereich der Anlagefläche 10 gestuft bzw. gekröpft ausgeführt. Diese Stufung des Flanschabschnitts 8 ist derart ausgebildet, dass die Anlagefläche 10, die zum Anbringen der Bremsscheibe 11 an dem Radlager 1 dient, gegenüber dem Abschnitt 9 des Flanschabschnitts 8 in axialer Richtung x zu der Fahrzeuginnenseite 5 hin versetzt angeordnet ist. Der Versatz der Anlagefläche 10 gegenüber dem Abschnitt 9 erfolgt also entgegen der Richtung des Pfeils x in Fig. 1.

Auf der der Anlagefläche 10 für die Bremsscheibe 11 gegenüberliegenden Seite weist der Flanschabschnitt 8 einen zumindest in festigkeitsrelevanten Bereichen, insbesondere vom Verbindungsbereich der Radbolzen 13 zu dem zwischen dem Außenring 2 und dem Innenring 3 befindlichen Kugelsatz, umlaufenden Vorsprung 12 auf. Dadurch ergeben sich größere Wandstärken als es bei einem reinen Absatz der Fall wäre. Da der Flansch i.d.R. als Schmiedeteil mit anschließender spanender Bearbeitung hergestellt wird, ergibt sich dadurch außerdem ein für die Festigkeit zuträglicher metallurgischer Faserverlauf. Dennoch kann diese Kontur auch mit anderen Fertigungsverfahren hergestellt werden, beispielweise mittels Gießen und/oder spanend.

Der umlaufende Vorsprung 12 befindet sich, wie ebenfalls aus Fig. 1 hervorgeht, in radialer Richtung z außerhalb des Außenrings 2, was zusätzlich zu der kompakten Bauweise des Radlagers 1 beiträgt. Der Vorsprung 12 ist im vorliegenden Fall so groß, dass der Außenring 2 mit der Stufe des Innenrings 3 einen Hinterschnitt bildet, wodurch die kompakte Bauweise des Radlagers 1 gefördert und die Abdichtung gegenüber dem Eintrag von Schmutz und Wasser durch einen engen Vordichtspalt vereinfacht wird.

Der Vorsprung 12 kann je nach Geometrie des Außenrings 2 jedoch auch nur radial außerhalb der Lauffläche 2a des Außenrings 2 oder eines Bereich der radseitigen Radlagerdichtung angeordnet sein.

Des Weiteren ist in Fig. 1 zu erkennen, dass der Versatz der Anlagefläche 10 für die Bremsscheibe 11 gegenüber dem Abschnitt 9 des Flanschabschnitts 8 für das Rad in axialer Richtung x im Prinzip der Dicke der Bremsscheibe 11 entspricht, so dass auf der Fahrzeugaußenseite 6 des Radlagers 1 eine glatte bzw. ebene Fläche beim Übergang der Bremsscheibe 11 zu dem Flanschabschnitt 8 des Innenrings 3 entsteht.

In den Figuren 2, 3 und 4 sind eine erste Ausführungsform des Radlagers 1 und eine dazu passende Bremsscheibe 11 dargestellt. Fig. 4 zeigt dabei den zusammengebauten Zustand des Radlagers 1 mit der Bremsscheibe 11. Dabei ist erkennbar, dass die Bremsscheibe 11 einen derartigen Innendurchmesser aufweist, dass die an dem Radlager 1 angebrachten Radbolzen 13 zumindest teilweise radial außerhalb des Innendurchmessers der Bremsscheibe 11 liegen. Zur Durchführung der Radbolzen 13 weist die Bremsscheibe 11 Ausnehmungen 14 auf, die in den Figuren 3 und 4 dargestellt sind. Dadurch kann die Bremsscheibe 11 über die Radbolzen 13 und die Ausnehmungen 14 positioniert bzw. zentriert werden. Außerdem dienen die Radbolzen 13 der Verdrehsicherung der Bremsscheibe 11, d.h. die Bremsscheibe 11 weist neben dem konventionellen Kraftschluss zusätzlich einen Formschluss auf.

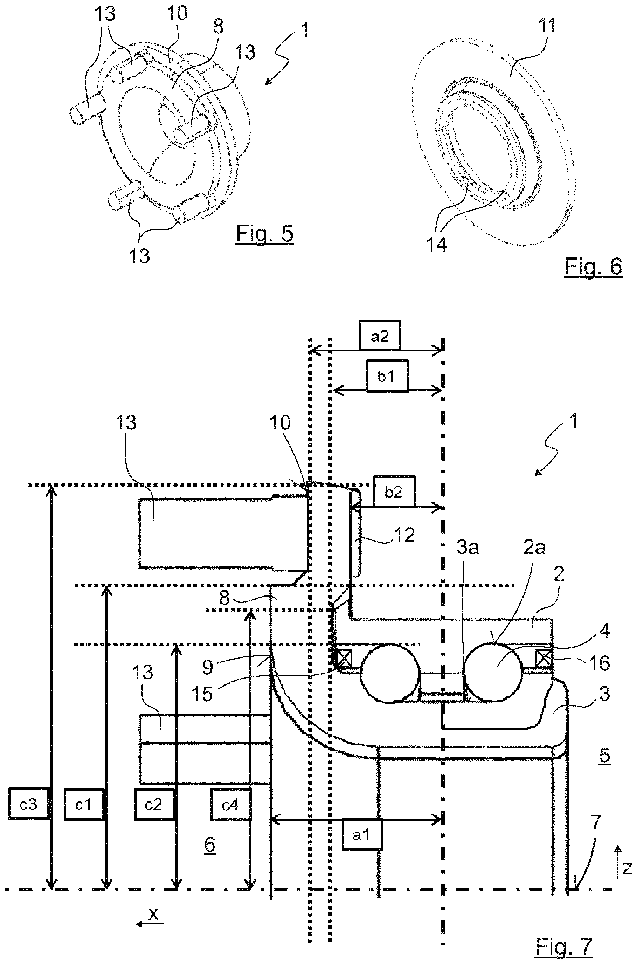

Die Figuren 5 und 6 zeigen eine weitere Ausführungsform des Radlagers 1 und eine dazu passende Bremsscheibe 11. Dabei ist erkennbar, dass sich die Anlagefläche 10 für die Bremsscheibe 11 in radialer Richtung z weiter außerhalb als bei der Ausführungsform der Figuren 2 bis 4 befindet. Dadurch kann der Innendurchmesser der Bremsscheibe 11 noch weiter vergrößert werden, wodurch sich kleinere Ausnehmungen 14 zur Durchführung der Radbolzen 13 ergeben.

Aufgrund der in Richtung des Innendurchmessers der Bremsscheibe 11 geöffneten Ausführung der Ausnehmungen 14 in der Bremsscheibe 11 kann auf ein ansonsten notwendiges Bohren derselben verzichtet werden. Wenn über die Ausnehmungen 14 keine Zentrierung der Bremsscheibe 11 erfolgt, können diese im rohen Zustand verbleiben. Eine Zentrierung der Bremsscheibe 11 ist auch über das untere oder das obere Ende der zweiten Anlagefläche 10 für die Bremsscheibe 11 möglich.

In Fig. 7 ist das Radlager 1 mit mehreren Maßen eingezeichnet, durch welche die geometrische Ausgestaltung desselben verdeutlicht werden soll. Hierbei haben die eingetragenen Maße folgende Bedeutung:
- a1 =: Abstand des fahrzeugaußenseitigen Endes des Flanschabschnitts 8 von der Mitte des Radlagers 1.
- a2 =: Abstand der Anlagefläche 10 für die Bremsscheibe 11 von der Mitte des Radlagers 1.
- b1 =: Abstand des Flanschabschnitts 8 im Bereich radial innerhalb des Durchmessers c4 von der Mitte des Radlagers 1.
- b2 =: Abstand des Flanschabschnitts 8 im Bereich radial außerhalb des Durchmessers c4 von der Mitte des Radlagers 1.
- c1 =: Abstand des unteren Absatzes der Anlagefläche 10 für die Bremsscheibe 11 von der Längsachse 7 des Radlagers 1.
- c2 =: Abstand der Lauffläche 2a des Außenrings 2 von der Längsachse 7 des Radlagers 1.
- c3 =: Abstand der äußeren Kante des Flanschabschnitts 8 von der Längsachse 7 des Radlagers 1.
- c4 =: Abstand der Aussparung des Innenrings 3 für Teile des Außenrings 2, der Radlagerdichtung 15 oder des Wälzkörpersatzes 4 von der Längsachse 7 des Radlagers 1.

Hierbei gelten im vorliegenden Fall folgende Verhältnisse:

| | |
|---|---|
| a1 > a2: | Das fahrzeugaußenseitige Ende des Flanschabschnitts 8 liegt näher an der Fahrzeugaußenseite 6 als die Anlagefläche 10 für die Bremsscheibe 11. |
| b1 > b2: | Der als Verschraubungsbereich bezeichnete Bereich, in dem sich die Radbolzen 13 befinden, ist gegenüber der Radnabe radial außerhalb von Teilen des Außenrings 2, der Radlagerdichtung 15 oder des Wälzkörpersatzes 4 in Richtung der Fahrzeuginnenseite 5 verschoben. |
| c1 > c2: | Der Innendurchmesser der Bremsscheibe 11 ist größer als der Durchmesser der Lauffläche 2a des Außenrings 2, gemessen im Kontaktwinkel. |

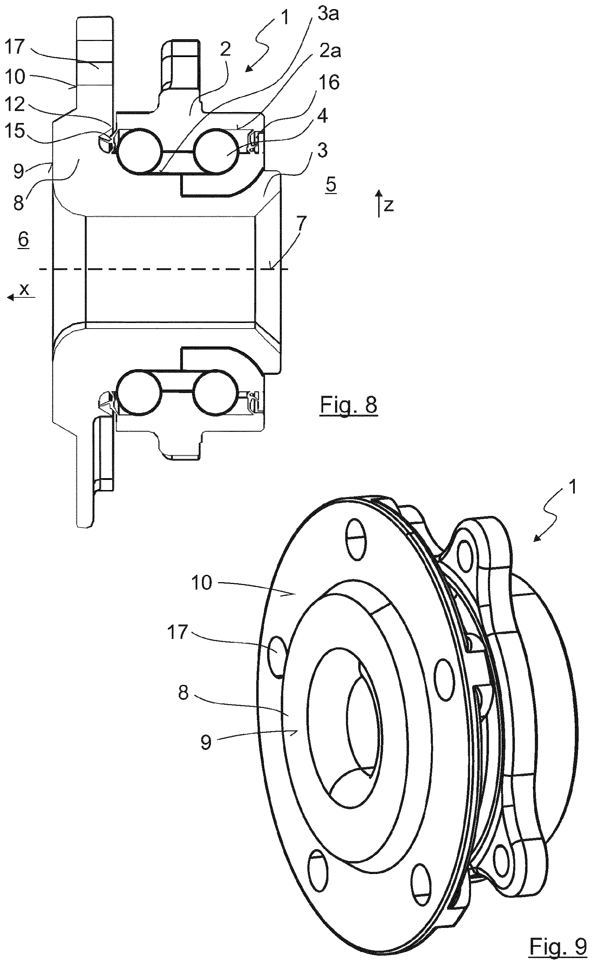

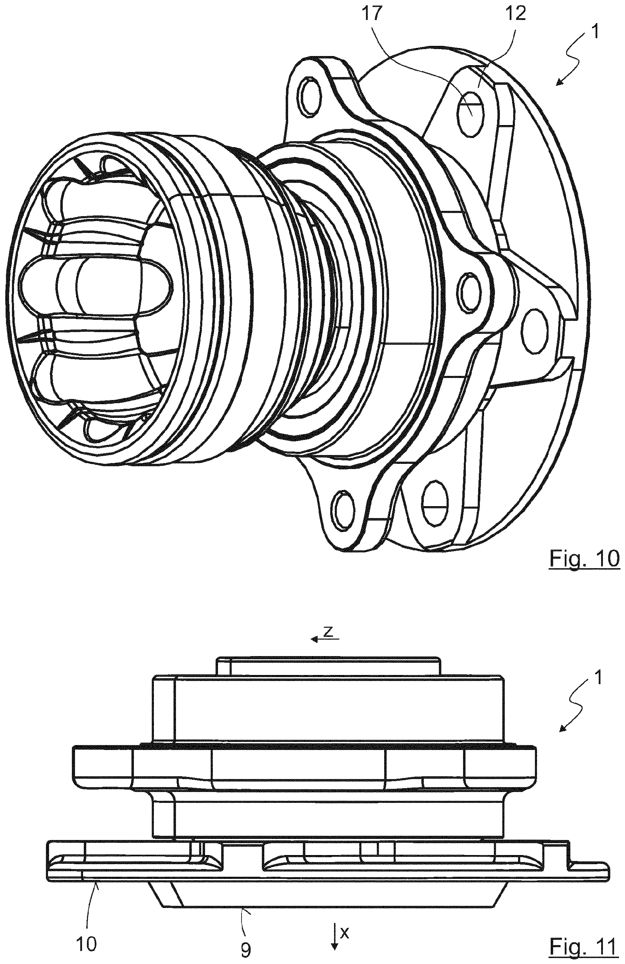

In den Figuren 8 bis 10 sind mehrere Ansichten einer weiteren Ausführungsform des Radlagers 1 dargestellt. Dabei sind zusätzlich zwischen dem Au-ßenring 2 und dem Innenring 3 angeordnete Radlagerdichtungen 15 und 16 zu erkennen. Insbesondere aus Fig. 8 geht hervor, dass der Vorsprung 12 radial außerhalb der radseitigen Radlagerdichtung 15 angeordnet ist. Des Weiteren sind bei dieser Ausführungsform die Radbolzen 13 durch entsprechende Bohrungen 17 ersetzt, in die nicht dargestellte Radschrauben eingeschraubt werden, um das Rad zu befestigen. Auch in dieser Ausführungsvariante gelten die unter Bezugnahme auf Fig. 7 beschriebenen Größenverhältnisse.

## Patentansprüche

1. Radlageranordnung (1) für ein Kraftfahrzeug, mit einem Außenring (2), mit einem zumindest teilweise innerhalb des Außenrings (2) angeordneten Innenring (3), mit einer in axialer Richtung (x) des Außenrings (2) und des Innenrings (3) von einer Fahrzeuginnenseite (5) zu einer Fahrzeugaußenseite (6) verlaufenden Längsachse (7) und mit einer Bremsscheibe (11), wobei der Innenring (3) an seinem der Fahrzeugaußenseite (6) zugerichteten Ende einen Flanschabschnitt (8) mit einem ersten, am weitesten von einer axialen Mitte des Außenrings (2) beabstandeten Abschnitt (9) und mit einem zweiten Abschnitt, der eine Anlagefläche (10) zum Anbringen der Bremsscheibe (11) bildet, aufweist, wobei der Flanschabschnitt (8) derart gestuft ausbildet ist, dass die Anlagefläche (10) zum Anbringen der Bremsscheibe (11) gegenüber dem am weitesten von der axialen Mitte des Außenrings (2) beabstandeten Abschnitt (9) des Flanschabschnitts (8) in axialer Richtung (x) zu der Fahrzeuginnenseite (5) hin versetzt angeordnet ist, wobei sich auf der der Anlagefläche (10) zum Anbringen der Bremsscheibe (11) gegenüberliegenden Seite ein zumindest bereichsweise umlaufender Vorsprung (12) befindet und der Vorsprung (12) einen Hinterschnitt bildet, in den zumindest eine Radlagerdichtung (15) hineinragt, **dadurch gekennzeichnet dass** der Versatz der Anlagefläche (10) zum Anbringen der Bremsscheibe (11) gegenüber dem am weitesten von der axialen Mitte des Außenrings (2) beabstandeten Abschnitt (9) des Flanschabschnitts (8) in axialer Richtung (x) der Dicke der Bremsscheibe (11) entspricht.

2. Radlageranordnung nach Anspruch 1,
**dadurch gekennzeichnet, dass** die Anlagefläche (10) zum Anbringen der Bremsscheibe (11) gegenüber dem am weitesten von der axialen Mitte des Außenrings (2) beabstandeten Abschnitt (9) des Flanschabschnitts (8) in radialer Richtung (z) außen angeordnet ist.

3. Radlageranordnung nach Anspruch 1 oder 2,
**dadurch gekennzeichnet, dass**
der sich auf der der Anlagefläche (10) zum Anbringen der Bremsscheibe (11) gegenüberliegenden Seite befindende, zumindest teilweise umlaufende Vorsprung (12) in radialer Richtung (z) außerhalb von Teilen des Außenrings (2), einer Radlagerdichtung (15) oder eines Wälzkörpersatzes (4) angeordnet ist.

4. Radlageranordnung nach Anspruch 1, 2 oder 3,
**dadurch gekennzeichnet, dass**
der Innendurchmesser der Bremsscheibe (11) größer ist als der Durchmesser einer Lauffläche (2a) des Außenrings (2), gemessen im Kontaktwinkel.

5. Radlageranordnung nach einem der Ansprüche 1 bis 4,
**dadurch gekennzeichnet, dass**
die Bremsscheibe (11) einen derartigen Innendurchmesser aufweist, dass an dem Radlager (1) angebrachte Radbolzen (13) zumindest teilweise radial weiter außen liegen als der Innendurchmesser der Bremsscheibe (11).

6. Radlageranordnung nach Anspruch 5,
**dadurch gekennzeichnet, dass**
die Bremsscheibe (11) Ausnehmungen (14) zur Durchführung der Radbolzen (13) aufweist.

## Claims

1. Radial bearing arrangement (1) for a motor vehicle with an outer ring (2), with an inner ring (3) arranged at least partially inside the outer ring (2), with a longitudinal axis (7) extending in axial direction (x) of the outer ring (2) and the inner ring (3) from a vehicle inner side (5) to a vehicle outer side (6) and with a brake disc (11), wherein the inner ring (3) is provided at its end facing the vehicle outer side (6) with a flange section (8) having a first section (9) arranged spaced at the furthest point from an axial centre of the outer ring (2), and a second section, which forms a contact surface (10) for attaching the brake disk (11), wherein the flange section (8) is configured to be stepped such that the contact surface (10) for attaching the brake disk (11) is arranged offset relative to the section (9) of the flange section (8) spaced at the furthest point from the axial centre of the outer ring (2) in axial direction (x) towards the vehicle inner side (5), wherein on the side opposite the contact surface (10) for attaching the brake disk (11) an at least partially peripheral projection (12) is arranged, and the projection (12) forms an undercut into which at least one wheel bearing seal (15) projects, **characterised in that** the offset of the contact surface (10) for attaching the brake disc (11) with respect to the section (9) of the flange section (8) furthest from the axial centre of the outer ring (2) corresponds in axial direction (x) to the thickness of the brake disc (11).

2. Wheel bearing arrangement according to claim 1,
**characterised in that**
the contact surface (10) for attaching the brake disk (11) is arranged outside relative to the section (9) of the flange section (8) in radial direction (z) at the furthest point from the axial centre of the outer ring (2).

3. Wheel bearing arrangement according to claim 1 or 2,
**characterised in that**
the at least partially peripheral projection (12) located on the side opposite the contact surface (10) for attaching the brake disc (11) is arranged in radial direction (z) outside parts of the outer ring (2), a wheel bearing seal (15) or a roller element set (4).

4. Wheel bearing arrangement according to claim 1, 2 or 3,
**characterised in that**
the inner diameter of the brake disk (11) is larger than the diameter of a bearing surface (2a) of the outer ring (2) measured in a contact angle.

5. Wheel bearing arrangement according to any of claims 1 to 4,
**characterised in that**
the brake disk (11) has such an inner diameter that wheel bolts (13) attached to the wheel bearing (1) lie at least partly radially further out than the inner diameter of the brake disk (11).

6. Wheel bearing arrangement according to claim 5,
**characterised in that**
the brake disk (11) is provided with recesses (14) for feeding through the wheel bolts (13).

## Revendications

1. Agencement de palier de roue (1) pour un véhicule automobile, avec une bague extérieure (2), avec une bague intérieure (3) agencée au moins partiellement à l'intérieur de la bague extérieure (2), avec un axe longitudinal (7) s'étendant dans la direction axiale (x) de la bague extérieure (2) et de la bague intérieure (3) d'un côté intérieur (5) du véhicule vers un côté extérieur (6) du véhicule et avec un disque de frein (11), dans lequel la bague intérieure (3) présente, à son extrémité orientée vers le côté extérieur (6) du véhicule, une section de bride (8) avec une première section (9) la plus éloignée d'un centre axial de la bague extérieure (2) et avec une seconde section qui forme une surface d'appui (10) pour le montage du disque de frein (11), dans lequel la section de bride (8) est réalisée en gradins de sorte que la surface d'appui (10) pour le montage du disque de frein (11) est agencée de manière décalée dans la direction axiale (x) vers le côté intérieur (5) du véhicule par rapport à la section (9) de la section de bride (8) la plus éloignée du centre axial de la bague extérieure (2), dans lequel, sur le côté opposé à la surface d'appui (10) pour la mise en place du disque de frein (11), se trouve une saillie (12) périphérique au moins par zones et la saillie (12) forme une contre-dépouille dans laquelle pénètre au moins un joint de palier de roue (15), **caractérisé en ce que** le décalage de la surface d'appui (10) pour le montage du disque de frein (11) par rapport à la section (9) de la section de bride (8) la plus éloignée du centre axial de la bague extérieure (2) dans la direction axiale (x) correspond à l'épaisseur du disque de frein (11).

2. Agencement de palier de roue selon la revendication 1,
**caractérisée en ce que**
la surface d'appui (10) pour le montage du disque de frein (11) est agencée à l'extérieur dans la direction radiale (z) par rapport à la section (9) de la section de bride (8) la plus éloignée du centre axial de la bague extérieure (2).

3. Agencement de palier de roue selon la revendication 1 ou 2,
**caractérisée en ce que**
la saillie (12) au moins partiellement périphérique se trouvant sur le côté opposé à la surface d'appui (10) pour le montage du disque de frein (11) est agencée dans la direction radiale (z) à l'extérieur de parties de la bague extérieure (2), d'un joint de palier de roue (15) ou d'un jeu de corps de roulement (4).

4. Agencement de palier de roue selon la revendication 1, 2 ou 3,
**caractérisée en ce que**
le diamètre intérieur du disque de frein (11) est plus grand que le diamètre d'une surface de roulement (2a) de la bague extérieure (2), mesuré dans l'angle de contact.

5. Agencement de palier de roue selon l'une quelconque des revendications 1 à 4, **caractérisée en ce que**
le disque de frein (11) présente un diamètre intérieur tel que des boulons de roue (13) montés sur le palier de roue (1) se trouvent au moins partiellement radialement plus à l'extérieur que le diamètre intérieur du disque de frein (11).

6. Agencement de palier de roue selon la revendication 5,
**caractérisée en ce que**
le disque de frein (11) présente des évidements (14) pour le passage des boulons de roue (13).
